# EUROPEAN PATENT APPLICATION

(11) **EP 2 800 387 A1**
(43) Date of publication of application: **05.11.2014**
(21) Application number: 14166478.9
(22) Date of filing: 29.04.2014
(51) Int. Cl.: H04N 21/231, H04N 21/442, H04N 21/845, H04N 21/854

(54) **Caching of content**

(30) Priority: 01.05.2013 GB 201307887
(71) Applicant: Openwave Mobility, Inc., Redwood City, CA 94063 (US)
(72) Inventor: Harrison, Declan, Belfast, Northern Ireland, BT8 8 BQ (GB); Mcquillan, Eoin, Belfast, Northern Ireland, BT8 8GW (GB)
(74) Representative: EIP

(57) **Abstract**

There is described a system of operating a network entity to distribute a media stream in a communications network. A plurality of different versions of the media stream are available from a content source, each version having a respective quality level different to that of the other versions and each version of the media stream comprises a plurality of consecutive portions. A first request is received from a user device for a portion of a first one of the versions of the media stream stored at a content source and a caching procedure is performed in response to receiving the first request. The caching procedure comprises requesting from the content source at least one portion of at least one of the other versions of the media stream or at least one other portion of the first one of the versions of the media stream; receiving the requested at least one portion or the at least one other portion; and causing the received at least one portion or the at least one other portion to be cached at a cache in the communication network.

## Description

### Field of the Invention

The present invention relates to systems and methods for caching of content for adaptive streaming, for example, HTTP adaptive video streaming.

### Background

Hyper Text Transfer Protocol (HTTP) Adaptive Video Streaming (AVS) is a known technique used to stream video content over the Internet and other communications networks. In order to support HTTP AVS, typically, a video server, in a communication network, makes available for download multiple versions or streams of the same video content, each version having one or more characteristics associated therewith that are different to those of the other versions. For example, the one or more characteristics may relate to video quality, as indicated, for example, by bit rate, or resolution, or codec used. Other characteristics that may differ from version to include the data container (e.g. MP4, Flash, etc) used to contain the video content and the device type(s) that can play a given version.

Each version is sub divided into a plurality of consecutive smaller multi-seconds parts known as segments or chunks. Each segment is typically between 2 to 10 seconds of duration. The video server also makes available a so called manifest file which contains information (e.g. meta-data) describing each and every available segment which is to be used by a client device in order to play back segments. A manifest file also contains a different pointer to or an address (typically a Uniform Resource Locator (URL)) for each segment of each version of the video content, or alternatively, a different pointer to or an address (again typically a URL) for each version of the video content and a byte range for each different segment within each version. This segment pointer information enables a client device to individually request segments from the server.

Prior to downloading desired video content from the video server, a client device first downloads the manifest file for that video content and uses the manifest file to identify the different available versions of the video content. Based on the information in the manifest file, the client sends sequential HTTP requests for segments of the video content, the segments being those that have a bit rate most appropriate for the download bandwidth currently available to the client device. Typically, in HTTP adaptive streaming, a HTTP GET request will only be issued by a client device for the next segment in the sequent when the complete previous segment has been received.

The client device continuously monitors the available download bandwidth and if it finds that the bandwidth has deteriorated to an extent that it is now too low for the bit rate of the segments currently being downloaded, the client device starts to request the next segments for displaying the video content from a lower bit rate stream (if available). Conversely, if it finds that the bandwidth has improved to an extent that it can accommodate a higher bit rate than that of the segments currently being downloaded, the client device starts to request the next segments for displaying the video content from a higher bit rate stream (if available).

Accordingly, HTTP AVS enables a user device to dynamically select the best available stream according to network throughput. Requesting segments one after the other at possibly different resolutions can result in a smoother video experience for a user even if the available bandwidth varies.

Current proprietary implementations of HTTP AVS include Microsoft's 'Smooth Streaming' implemented by its Silverlight player, Apple's 'HTTP Adaptive BitRate Streaming' implemented in its desktop and mobile products, and Adobe's 'HTTP Dynamic Streaming' implemented by its Flash player (v10.1 and later). All three of these implementations support H.264 as a video codec and Advanced Audio Coding (AAC) as an audio codec.

In addition, the standards body 3GPP has defined its standard 'Dynamic Adaptive Streaming over HTTP' and the standards body MPEG its standard 'Dynamic Adaptive HTTP Streaming'.

To facilitate the delivery of video content to a client device, it is known to store copies of the video content at caches at locations in a communication network that are closer to end user devices than is the origin server of that content. In the specific case of HTTP AVS it is known to cache specific segment variants in response to that segment variant being requested by a user device.

It is desirable provide an improved system for caching media content.

### Summary of the Invention

According to the invention, there is provided, the method of claim 1.

According to the invention there is also provided the apparatus of claim 12.

According to the invention, there is also provided the computer programme of claim 13.

The characteristic may relate to a quality level of the media stream.

Advantageously, the at least one portion of at least one of the other versions of the media stream or the at least one other portion of the first one of the versions of the media stream is then available from the cache if it is subsequently requested by the user device, or indeed a different user device. This is despite that portion not yet having been requested by the user device or not having been previously cached following a previous request for it.

### Brief Description of the Drawings

Methods and systems for will now be described as an embodiment, by way of example only, with reference to the accompanying figures in which:
Figure 1 is a schematic illustration of a communications network;
Figure 2 is a schematic illustration of video content;
Figure 3 is a schematic illustration of communications between components in the communications network of Figure 1;
Figure 4 is a schematic illustration of a cache digest;
Figure 5 is a schematic illustration of a computer system.

Several parts and components appear in more than one Figure; for the sake of clarity the same reference numeral will be used to refer to the same part and component in all of the Figures.

### Detailed Description of Illustrative Embodiments

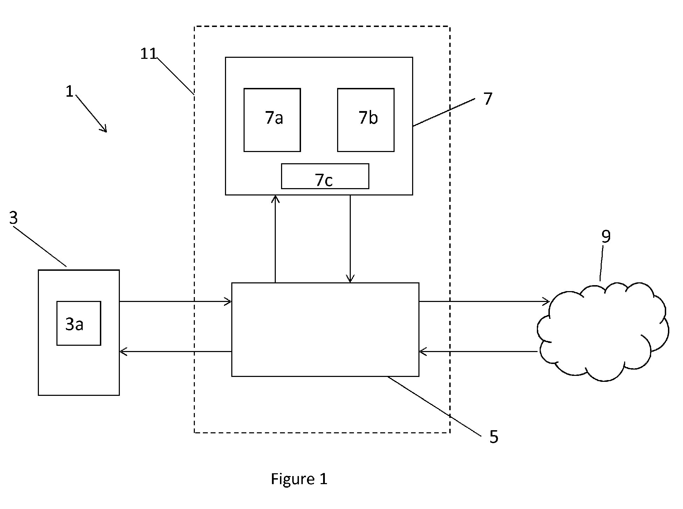

Figure 1 depicts a content delivery system 1 in accordance with an embodiment of the invention. As described in more detail below, the content delivery system 1 includes a client device 3, a proxy 5, a cache 7, and an origin server 9. Although Figure 1 is described with respect to one client device, one proxy, one cache, and one origin server, the description is not limited to a single client device, proxy server, cache, and origin server. It will be appreciated that the system 1 and the connections shown are simplifications and that embodiments may operate in substantially more complex systems.

The client device 3 may be networked device including, without limitation, a mobile phone, a smart phone, a personal digital assistant (PDA), a tablet, a set-top box, a video player, a laptop, a smart TV, or a personal computer (PC).

In one embodiment, the client device 3 is a wireless device that can support at least one of various different radio frequency (RF) communications protocols, including without limitation, Global System for Mobile communications (GSM), Universal Mobile Telecommunications System (UMTS), Code Division Multiple Access (CDMA), Worldwide Interoperability for Microwave Access (WiMax) and communications protocols as defined by the 3^{rd} Generation Partnership Project (3GPP) or the 3^{rd} Generation Partnership Project 2 (3GPP2), 4G Long Term Evolution (LTE) and IEEE 802.16 standards bodies.

Although some wireless communications protocols are identified herein, it should be understood that the present disclosure is not limited to the cited wireless communications protocols.

In another embodiment, the client device 3 is a wired device that communicates with the proxy 5 through a communication interface, such as an analog modem, ISDN modem or terminal adapter, DSL modem, cable modem, Ethernet/IEEE 802.3 interface, or a combination thereof.

In another embodiment, the client device 3 is connected to the proxy 5 via a combination of wireless and wired communication interfaces.

The client device 3 runs an adaptive streaming player 3a capable of obtaining and presenting, by means of adaptive streaming, content to a user of the client device 3. For example, the player 3a may display video on a screen (not shown) of the client device 3.

The proxy 5 is in the data communications path between the client device 3 and the origin server 9 and is implemented in, for example, a proxy server or gateway. In one embodiment, the proxy 5 is a transparent proxy that passes requests and responses (e.g., HTTP requests and responses) between client devices such as the client device 3 and host servers such as the origin server 9 without modifying the requests and responses. A proxy that simply passes requests and responses is often referred to as a gateway or tunnelling proxy.

In another embodiment, the proxy 5 is a non-transparent proxy that can modifies requests and responses between client devices and host servers in order to provide additional services. For example, a non-transparent proxy may provide group annotation services, media type transformation services, or protocol reduction services. In one embodiment, the proxy is an HTTP proxy that can parse HTTP requests and HTTP responses.

The proxy 5 is coupled to the cache 7, which may be located in the same server as the proxy 5 or may be located in a physically separate computer system. The cache 7 comprises a cache database 7a for storing cached data and a cache controller 7b for controlling the caching of data in the database 7b. The cache 7 may further comprise a caching policy 7c that defines a policy based upon which the cache controller 7b determines content for requesting from the origin server 9 for caching in the cache database 7a.

In one embodiment, the proxy 5 is part of a wireless service provider network and the client device 3 is a wireless device, such as a mobile phone, that is a recognized/authorized subscriber to the wireless service provider network.

In one embodiment, the proxy 5 and the cache 7 are part of an access network 11, which provides a communications interface for the client device 3 to access a Public Data Network such as the Internet, or a public or private intranet. Typical access networks include wireless service provider networks (e.g., that offer 3G, 4G and/or WiFi access) and Internet Service Providers (ISPs, e.g., that offer dial-up, DSL, and cable modem access).

A private enterprise network can also serve as the access network if client devices within the private enterprise network can access the Internet through the private enterprise network. In one embodiment, the access network 11 is a wireless service provider network that provides a wireless communications interface for the client device 3. The wireless service provider network is accessible on a subscription basis (e.g., prepaid or post-paid) as is known in the field.

In an embodiment, the wireless service provider network is a closed domain that is accessible only by a subscriber (e.g. a user of the user device) that is in good standing with the operator of the wireless service provider network. The wireless service provider network may include a radio access network (not shown) and an Internet gateway (not shown). The radio access network includes one or more base stations to facilitate communications among wireless devices that are within a communication range of the base stations. Each base station has at least one RF transceiver and the base stations communicate with the wireless devices using RF communication signals. The radio access network 11 facilitates network communications among multiple wireless devices within the same wireless service provider network and between wireless devices in other wireless service provider networks and provides interfaces to facilitate communications with other entities, such as a Public Switched Telephone Network (PSTN), a Wide Area Network (WAN), the Internet, Internet servers, hosts, etc., which are outside of the wireless service provider network.

In an embodiment, the wireless service provider network is operated by a single wireless service provider, such as, for example, Vodaphone (RTM). The Internet gateway (not shown) of the access network provides a gateway for communications between the client device 3 and Internet-connected hosts and/or servers, which can also be referred to as the "cloud." The Internet gateway may include a Serving General Packet Radio Service (GPRS) Support Node (SGSN) and a Gateway GPRS Support Node (GGSN). For example, the Internet gateway can be a Wireless Application Protocol (WAP) gateway that converts the WAP protocol used by the access network (such as a wireless service provider network) to the HTTP protocol used by the Internet.

In an embodiment, the Internet gateway enables the user device to access multimedia content, such as HTML, compact HTML (cHTML), and extensible HTML (xHTML), which is stored on Internet-connected hosts and/or servers. In this way, the access network 11 provides access to the Internet for its subscribers.

The origin server 9 can be any device or system that hosts digital content, which can be stored in various formats, such as video files, audio files, and/or text files. In one embodiment, the origin server is an Internet-connected host or server that hosts Internet accessible content elements. The origin server may be a web server that can be accessed via, for example, HTTP, Internet Message Access Protocol (IMAP), or File Transfer Protocol (FTP). A content element is any set of digital data suitable for transfer in a networked environment, such as video files, markup language files, scripting language files, music files, image files or any other type of resource that can be located and addressed through, for example, the Internet.

In a preferred embodiment, the origin server 9 makes available video or other content by adaptive streaming, for example, HTTP adaptive streaming. Accordingly, the origin server 9 makes available content that is divided into a plurality of segments or portions with each segment or portion being available at different resolutions or quality levels.

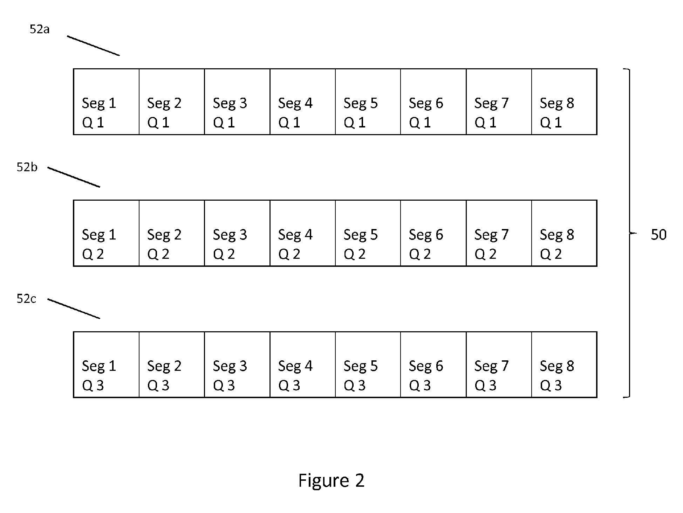

Figure 2 illustrates an example of a video content 50 made available by the origin server 9, for example, by being stored at the origin server 9, in a plurality of different versions, in this example, three different versions 52a, 52b and 52c. In this example each version 52a, 52b, 52c is at a respective quality level Q1, Q2, and Q3 different from the other versions. For example, version 52a is at quality Q1 which represents a relatively low bit rate, version 52b is at quality Q2 which represents a medium bit rate, and version 52a is at quality Q3 which represents a relatively high bit rate. Each version 52a, 52b and 52c is segmented into a plurality of segments (Seg 1 to Seg 8), eight in this example. The segments in the three different versions 52a, 52b and 52c that have the same segment sequence number substantially correspond to the same video content (e.g. the same action sequence), albeit each having a different quality level.

The origin server 9 also makes available a manifest file (not illustrated) which contains information about each available version of the video stream and a pointer to or an address for each segment of each version of the video content. In one example, the pointer to each segment is a unique address, for example a URL for that segment. In an alternative example, the pointer to each segment is a combination of a unique address, for example, a URL, for the version the segment is in and a byte range for that segment within that version.

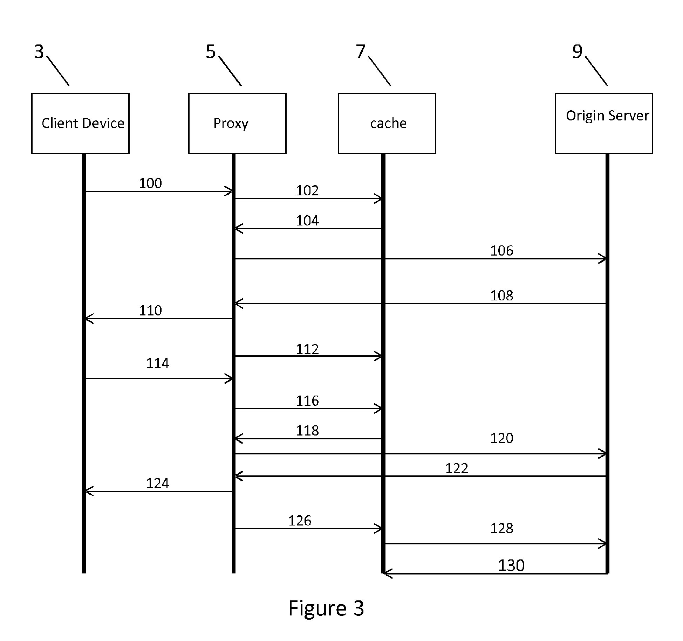

A method by which the system 1 operates in accordance with an exemplary embodiment will now be described with reference to Figure 3.

In a first step 100, the client device 3, for example by way of the player 3a, sends a request for a HTTP AS video stored at the origin server 9, for example, the video content or stream 50. The request is received at the proxy 5, in this example a HTTP proxy, which, at step 102, checks the cache 7 to determine whether or not the Manifest file for the video identified in the request is cached in the cache 7. In this example, the manifest file is not in the cache and so, at step 104, the cache 7 returns a 'cache miss' to the HTTP proxy 5. In response to receiving the 'cache miss', at step 106, the HTTP proxy 5 forwards the request to the origin server 9. At step 108, the origin server 9 sends the manifest file to the HTTP proxy 5 which at step 110 forwards the manifest file to the client device 3 and at step 112 caches a copy of the manifest file in the cache 7.

In one embodiment, the HTTP proxy 5 is arranged to cache the manifest file only if it determines that the manifest file is a popular file to download amongst the client devices connected to the HTTP proxy 5. For example, the HTTP proxy 5 may be arranged to cache the manifest file if it determines that the number of times that the file has been downloaded within a given time period has exceeded a pre-set threshold value.

In an alternative embodiment, the HTTP proxy 5 is arranged to automatically cache the manifest file without making any determination as to how popular it is.

After the cache 7 receives the manifest file, the cache controller 7a determines that it is a HTTP- AS manifest file. There are a number of ways the cache controller 7a may determine that the file is a HTTP- AS manifest file. For example: the file may include an identifier (e.g. Internet Media Type, MIME Type, etc) identifying it as a manifest file and which the cache controller 7a recognizes; the URL of the file may be known to the cache controller 7a as a URL of a manifest file; or the cache controller 7a may use a content recognition scheme that recognises the content of the file as being that of a manifest file.

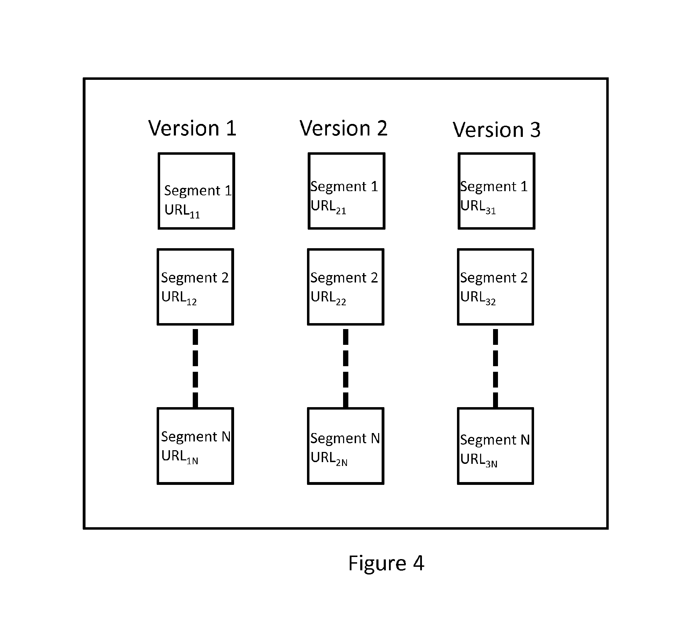

The cache controller 7a parses the manifest file and extracts from it information about each version or variant of each segment identified in the manifest file. The information includes the URL of each variant of each segment (or combination of URL and byte range) and this information may be stored in memory in the cache as an index associated with each segment, for example, as a form of cache digest. Figure 4 is a schematic illustration of this cache digest.

At step 114, the client device 3 transmits a request for a segment of the HTTP-AS Video to play. The request is for an initial segment of the HTTP - AS video (e.g. Seg 1) if the user device 103 is commencing to send requests for segments of the HTTP - AS video or, it is for a later segment, in a sequence of segments, if the user device 3 has some time earlier commenced sending requests for segments of the HTTP - AS video. As is standard for HTTP - AS video, the client device 3 monitors the bandwidth available to it and requests a segment variant (e.g. Q1, Q2, or Q3) that has a bit rate or resolution appropriate for that bandwidth.

The HTTP proxy 5 receives the request and sends a cache look up to the cache 7 at step 116 to determine if the requested segment variant is in the cache 7. In this example, the requested segment variant is not in the cache and so, at step 118, the cache 7 returns a cache miss to the HTTP proxy 5. At step 120, the HTTP proxy 5 sends the request to the origin server 9. At step 122, the origin server 9 returns the requested segment variant to the HTTP proxy 5 and at step 124 the HTTP proxy 5 forwards the segment variant to the client device 3 for presentation by the player 3a.

At this point, the HTTP proxy 5 also determines whether or not to cache a copy of the just received segment variant. In one embodiment, the HTTP proxy 5 is arranged to cache the segment variant only if it determines that the segment to which that variant relates is a popular segment to download amongst the client devices connected to the HTTP proxy 5. For example, the HTTP proxy 5 may be arranged to cache the segment variant if it determines that the total number of times that that segment, whatever variant of it, has been downloaded within a given time period has exceeded a pre-set threshold value. Alternatively, the HTTP proxy 5 may be arranged to cache the segment variant if it determines that the total number of downloads of segments from the video content 100 exceeds a threshold.

In this example, the HTTP proxy 5 determines that the segment variant should be cached and accordingly, at step 126, caches the segment variant in the cache 7.

After the cache 7 receives the segment variant, the cache controller 7b identifies that the segment variant is a HTTP-AS segment and in response, at step 128, requests at least one segment of at least one of the other versions of the video content 50 and/or at least one other segment of the same version of the video content 50 from the content source 9. At step 130, the origin server 9 returns the requested segment or segments to the cache 7 where it or they are cached in the cache database 7a. In this way, advantageously, this segment or segments are available from the cache if they are subsequently requested by the user device 103, or indeed a different user device.

In one example, in response to the cache controller 7b identifying that the segment variant is a HTTP-AS segment, it extracts from the manifest index the respective pointer of each of the other variants of the segment stored at the origin server 9 and sends a request to the origin server 9 for each of these other variants to be downloaded to the cache 7. In one example a single request message is used to request each variant. In an alternative example, a separate request message is used to request each separate variant.

As an illustration, if the segment variant cached at step 126 is Seg 3, Q2 of the content 50 (i.e. the third segment in the sequence and having the medium bit rate), at step 128, the cache controller 7b requests from the origin server 9 Segment 3 having Q1 of the version 50a and Segment 3 having Q3 of version 52c, which are then also cached at the cache 7. In this way, each variant of the segment is cached at the cache 7 and so if the HTTP proxy 5 receives a subsequent request for that segment, the segment can be served directly from the cache 7, whatever the required quality, rather than from the origin server 9.

Significantly, in this caching procedure, neither Segment 3 at Q1 nor Segment 3 at Q3 is cached as a result of the client device 3 requesting that particular segment at that particular quality, but is instead cached as a result of the client device 3 requesting that particular segment at a different quality.

In addition, or alternatively, the cache controller 7a may, for example, request one or more further segments from the same version of the video content 50 and these segments may precede or be subsequent to the segment that has just been received.

In addition, or alternatively, the cache controller 7a may, for example, request one or more further segments from one or more of the other versions of the video content 50 and these segments may precede or be subsequent to the segment that has just been received.

Accordingly, in some examples, in addition to or instead of requesting and caching some or all of the variants of the just received segment, the cache controller 7b extracts from the manifest index the respective pointer of each of a number variants of each of a number of the next segments to the just received segment in the sequence and requests from the origin server 9 each of these segment variants to be downloaded to the cache 7. For example, the cache controller 7c may request the next N, say 5, segments in the sequence, at all or a subset of the segment variants. So again, continuing along the lines of the specific example described above, if the segment variant cached at step 126 is Seg 3, Q2 of the content 50 (i.e. the third segment in the sequence and having the medium bit rate), at step 128, the cache controller 7b requests from the origin server 9 all of Segments 4 through to 8 at each of the three available qualities Q1, Q2, Q3, which are then also cached at the cache 7. Advantageously, if the client device 3 subsequently requests any of these segments (starting with Segment 4), they can be promptly, served from the cache 7 whatever the requested quality level.

In some examples, the cache controller 7b does not request that all of the other variants of the segment (or all of the variants of a different segment) are downloaded from the origin server 9 but only a sub-set of those variants. The cache controller 7b may determine which of the variants to download based on a caching policy 7c maintained at the cache 7. The caching policy 7c may indicate, for example, that segments above a particular quality level are not to be downloaded and cached. For example, the caching policy 7c may indicate that segments, having a quality level that is too high for the inherent maximum bandwidth that could ever be available to user devices connected to the proxy server 5, should not be downloaded and cached. This inherent maximum bandwidth will of course depend upon the technology underpinning the connection between the user devices and the Proxy server. Accordingly, continuing along the lines of the example given in the two paragraphs above, if Q3 is too high for the bandwidth supported by the access network 11 for its client devices, based on the caching policy 7c, at step 128, the cache controller 7b requests from the origin server 9 Segment 3 having Q1 for caching but not Segment 3 having Q3. Accordingly, in some examples, the caching policy may indicate policy dependent upon the type of connection (e.g, 2G, 3G, 4G etc) being used by the client device 3.

In some examples, the caching policy 7c may include a 'time of day' policy whereby the nature of variants download may be depend upon the current time. For example, at certain times of day, the caching policy may prohibit variants that are of a High Definition (HD) standard.

In some examples, the cache controller 7a may receive information returned by network probes indicating network congestion levels at a network cell including the device 3a and determine what variants to request based on the received congestion information and congestion rules defined in the caching policy 7c.

In some examples, the cache controller 7b is informed of the nature of the client device 3 (i.e. device and model type etc), for example, by way of a device identifying HTTP user agent header received from the client device 3, and determines from the caching policy 7c, a caching policy for this device/model type. For example, the caching policy 7c may indicate, that segments above a particular quality level are not to be downloaded and cached because that quality level is not compatible with the display screen resolution of the client device 3.

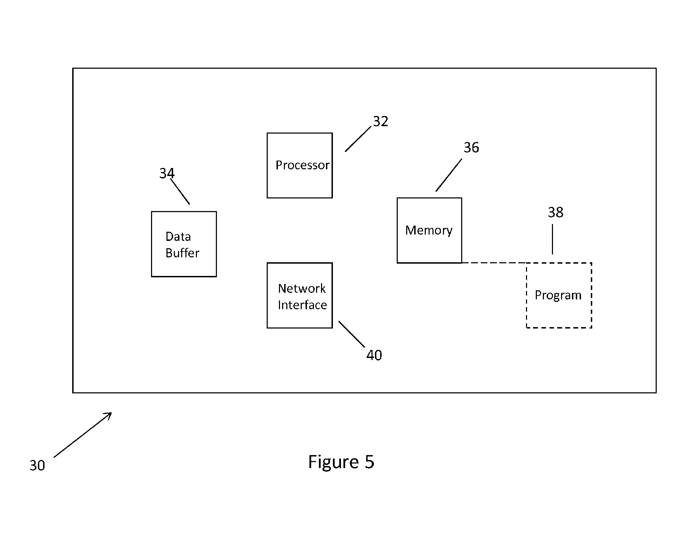

Reference is now made to Figure 5 for illustrating a simplified block diagram of a computer system 30 that is suitable for use in practicing the exemplary embodiments. In particular embodiments, the computer system 30 described in Figure 5 is configured for communications using the Internet Protocol (IP) suite of standards. In one embodiment, the computer system 30 may be implemented as the proxy server 5. In particular embodiment, the computer system 30 may also be implemented as a user device 3 on which the player 3a runs.

In an embodiment, the computer system 30 includes processing means such as at least one data processor 32, storing means including a data buffer 34 and at least one computer-readable memory 36 storing at least one computer program 38. The computer system 30 further includes communicating means such as a network interface 40 which may be used to receive and send data as described above.

The computer program 38 comprises a set of instructions that, when executed by the associated processor 32, enable the computer system 30 to operate in accordance with the exemplary embodiments described above. In these regards the exemplary embodiments may be implemented at least in part by computer software stored on the memory 36, or by hardware, or by a combination of tangibly stored software and hardware (and tangibly stored firmware).

Various embodiments of the computer readable memory 36 include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like. Various embodiments of the processor 32 include but are not limited to general purpose computers, special purpose computers, microprocessors, digital signal processors (DSPs) and multi-core processors.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The above exemplary embodiments are to be understood as illustrative examples of the invention. Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of operating a network entity to distribute a media stream in a communications network, in which communications network a plurality of different versions of the media stream are available from a content source, each version having a characteristic different to that of the other versions and wherein each version of the media stream comprises a plurality of consecutive portions, the method comprising:
receiving a first request from a user device for a portion of a first one of the versions of the media stream stored at a content source;
performing a caching procedure in response to receiving the first request, the caching procedure comprising:
requesting from the content source at least one portion of at least one of the other versions of the media stream and/or at least one other portion of the first one of the versions of the media stream;
receiving the requested at least one portion or the at least one other portion;
causing the received at least one portion or the at least one other portion to be cached at a cache in the communication network.

2. A method according to claim 1 wherein the requesting comprises requesting the respective portion of a plurality of the other versions of the media stream that corresponds with the portion of the first one of the versions of the media stream.

3. A method according to claim 2 wherein the requesting comprises requesting the respective portion of all of the other versions of the media streams that corresponds with the portion of the first one of the versions of the media stream.

4. A method according to claim 1 or claim 2 wherein the requesting comprises requesting at least one further portion of the first one of the versions of the media stream that is subsequent in the media stream to the portion of the first one of the versions of the media stream.

5. A method according to claim 4, wherein the requesting comprises requesting a plurality of consecutive portions of the first one of the versions of the media stream which plurality of consecutive portions are subsequent in sequence in the media stream to the portion of the first one of the versions of the media stream

6. A method according to any of claims 1 to 4, wherein the requesting comprises requesting a plurality of consecutive portions of at least one of the other versions of the media stream which plurality of consecutive portions are subsequent in sequence to the received portion.

7. A method according to any preceding claim, wherein the requesting is performed in response to determining that a number of download requests for one or more portions of one or more of versions of the media stream meets one or more predetermined criteria.

8. A method according to any preceding claim, wherein the requesting is performed in response to determining that a number of download requests for the portion of the first one of the versions of the media stream portions and for corresponding respective portions of the other versions of the media stream meets one or more predetermined criteria.

9. A method according to any preceding claim, further comprising selecting which at least one portion of at least one of the other versions of the media stream, or which at least one other portion of the first one of the versions of the media stream to request based at least partly upon at least one of: a time of day policy; one or more models of user device known to be connected to the network; current network congestion conditions; one or more network connection types supported by the network for user devices.

10. A method according to any preceding claim wherein the network entity comprises one or more components in an access network that provided Internet access to the user device.

11. A method according to any preceding claim wherein the characteristic is associated with a quality level of the media stream.

12. Apparatus for operating a network entity to distribute a media stream in a communications network, in which communications network a plurality of different versions of the media stream are available from a content source, each version having a characteristic different to that of the other versions and wherein each version of the media stream comprises a plurality of consecutive portions, the apparatus comprising a processing system arranged to implement the method of any of claim 1 to 11.

13. A computer programme comprising a set of instructions, which, when executed by a processing system causes the system to implement the method of any of claims 1 to 11.
